# EUROPÄISCHE PATENTANMELDUNG

(11) **EP 1 369 505 A2**
(43) Veröffentlichungstag der Anmeldung: **10.12.2003**
(21) Anmeldenummer: 03012907.6
(22) Anmeldetag: 06.06.2003
(51) Int. Cl.: C25D 21/16

(54) **Verfahren und Vorrichtung zur Spülwasserrückführung und Reinigung eines Prozessbades**

(30) Priorität: 06.06.2002 DE 10225203
(71) Anmelder: GOEMA AG, 71665 Vaihingen / Enz (DE)
(72) Erfinder: Klein, Rainer, 74321 Bietigheim-Bissingen (DE); Scheiffelen, Beate, 71287 Weissach (DE)
(74) Vertreter: Manitz, Finsterwald & Partner GbR

(57) **Zusammenfassung**

Es ist ein Verfahren und eine Vorrichtung zum Reinigen eines in einem Prozess verwendeten Prozessbades angegeben. Bei dem Verfahren wird zumindest ein Teil des in dem Prozess verwendeten Prozessbades und das gesamte nach dem Prozess anfallende Spülwasser eingedampft, bis eine Phasentrennung in eine untere Phase, eine mittlere Phase und eine obere Phase erfolgt, und die untere und die obere Phase werden abgetrennt.

## Beschreibung

Die Erfindung betrifft ein Verfahren und eine Vorrichtung zur Stoffkreislaufschließung, d. h. Rückführung der bei einem Prozess anfallenden Spülwässer, und zum Reinigen eines in einem Prozess verwendeten Prozessbades, insbesondere zum Reinigen eines Zn/Ni-Elektrolyten eines galvanischen Prozesses.

Prozessbäder werden im Laufe des Prozesses verunreinigt. Bei einem Galvanisierungsprozess mit einem alkalischen Zink/Nickel-(Zn/Ni-)Elektrolyten werden als Verunreinigungen beispielsweise Salze, wie NatriumCarbonat und -Sulfat angereichert. Dadurch wird die Qualität der beim Galvanisieren abgeschiedenen Schichten verschlechtert. Als weitere Folge der Verunreinigungen kann die Viskosität des Elektrolyten im Laufe des Prozesses ansteigen, wodurch wiederum die Ausschleppung der Chemikalien des Elektrolyten durch damit behandelte Gegenstände in das Spülwasser erhöht werden kann.

Durch die Verunreinigungen kann ferner die Stromausbeute im Prozess verringert werden, wodurch die Abscheidung bei der Galvanisierung verlangsamt wird. Wird als Gegenmaßnahme die Stromdichte erhöht, kann im Elektrolyten ein verstärkter Abbau der organischen Stoffe stattfinden. Dadurch werden organische Abbauprodukte angereichert.

Um diese Nachteile zu vermeiden, müssen verstärkt Bad-Chemikalien in das Prozessbades zugegeben werden. Gleichzeitig ist zur Qualitätssicherung eine regelmäßige Teilerneuerung des Elektrolyten notwendig.

Bekannt ist, dass ein Teil des Elektrolyten zur Reinigung des Prozessbades kontinuierlich ausgefroren wird, um den Gehalt an angereichertem Salz zu verringern.

Das in einer dem Prozessbad nachgeschalteten Spüle (beispielsweise Kaskadenspüle) kontinuierlich anfallende erste Spülwasser wird in eine physikalisch-chemische Abwasserbehandlungsanlage überführt. Je nach Art und Konzentration der im Prozessbad eingesetzten Komplexbildner muss die Abwasserbehandlung mit einem hohen Chemikalienbedarf durchgeführt werden. Oft können die geforderten Abwassergrenzwerte der Metalle nicht zuverlässig eingehalten werden. Zudem müssen die Abwässer getrennt von anderen Spülwassern behandelt werden, da durch eine Vermischung die Grenzwerte noch schwieriger einzuhalten sind.

Aufgabe der Erfindung ist es, ein Verfahren und eine Vorrichtung anzugeben, die den gesamten Stoffkreislauf schließen und gleichzeitig eine effiziente Reinigung eines Prozessbades ermöglichen.

Die Lösung dieser Aufgabe erfolgt durch die Merkmale der unabhängigen Ansprüche.

Erfindungsgemäß wird bei einem Prozessbad für einen Galvanisierungsprozess eine verbesserte Qualität der abgeschiedenen Schichten, eine konstante Stromausbeute und eine verminderte Ausschleppung von Chemikalien erreicht. Zusätzlich fällt durch die komplette Rückführung des Spülwassers praktisch kein Abwasser zur physikalisch-chemischen Abwasserbehandlung mehr an.

Vorteilhafte Ausführungsformen der Erfindung sind in der Beschreibung, der Zeichnung und den Unteransprüchen beschrieben.

Bei einer Ausführungsform der Erfindung wird in einem Verfahren zum Reinigen eines in einem Prozess verwendeten Prozessbades zumindest ein Teil des in dem Prozess verwendeten Prozessbades gemeinsam mit dem anfallenden ersten Spülwasser nach dem Prozess eingedampft, bis eine Phasentrennung in eine untere Phase, mindestens eine mittlere Phase und eine obere Phase erfolgt, und die untere und die obere Phase werden abgetrennt. Eine getrennte Eindampfung des Prozessbades (zur Reinigung) und des Spülwassers (zur Rückführung und Stoffkreislaufführung) ist ebenfalls möglich.

Dabei kann in der mittleren Phase das gereinigte Prozessbad angereichert werden. Infolgedessen kann durch die Abtrennung der oberen und der unteren Phase das gereinigte Prozessbad erhalten werden. Dies führt wiederum zu einer gleich bleibend hohen Stromausbeute beim Prozess, so dass die Produktionskosten gering gehalten werden. Ferner kann die Stromdichte im Wesentlichen konstant gehalten werden. So kann die Anreicherung von organischen Abbauprodukten, die eine Folge des verstärkten Abbaus der organischen Stoffe bei hoher Stromdichte ist, minimiert werden.

Als weitere Folge des erfindungsgemäßen Verfahrens kann das in der mittleren Phase angereicherte, gereinigte, überkonzentrierte Prozessbad ohne weiteren Zusatz von Chemikalien dem Originalbad wieder zugeführt werden.

Die untere Phase kann als Schlamm, die mittlere Phase kann als wässrige Phase und die obere Phase kann mit einem im Vergleich zur wässrigen Phase geringeren spezifischen Gewicht gebildet werden. Dies ermöglicht eine zuverlässige Trennung der Phasen.

In der unteren Phase können unerwünschte Salze des Prozessbades und in der oberen Phase können organische Verunreinigungen und/oder Metallkomplexe angereichert werden. Werden die untere und die obere Phase abgetrennt, können daher praktisch alle Verunreinigungen des Prozessbades ausgeschlossen werden. Dadurch wird ein Ansteigen der Viskosität des Elektrolyten vermieden, was wiederum die Ausschleppung von Prozessbad durch darin behandelte Gegenstände in das Spülwasser verringert.

Insbesondere kann das verwendete Prozessbad und / oder das anfallende Spülwasser oder der Teil des verwendeten Prozessbades aus dem Prozess entnommen, bis zur Phasentrennung eingedampft und die mittlere Phase als gereinigtes Prozessbad in den Prozess zurückgeführt werden. Dadurch ergibt sich ein wesentlich geringerer Verbrauch an Chemikalien für den Elektrolyten und für die Abwasserbehandlung des Spülwassers. Zudem kann die Rückführung und die Badreinigung gleichzeitig in einer Anlage erfolgen.

In einer weiteren Ausführungsform kann das Eindampfen im Vakuum bei niedrigen Temperaturen (etwa 45-55 °C) durchgeführt werden. Auf diese Weise wird eine Zersetzung der hitzeempfindlichen Komponenten des Prozessbades vermieden.

Ferner kann das Eindampfen und Abtrennen periodisch wiederholt werden. Dies ermöglicht eine regelmäßige Regeneration des Prozessbades, so dass die benötigte Elektrolytzusammensetzung gesichert und eine gleich bleibende Stromausbeute erhalten wird. Zudem wird gewährleistet, dass die Reaktionen in dem Prozess mit einer im Wesentlichen konstanten Geschwindigkeit ablaufen können und die Qualität der in dem Prozess behandelten Produkte gesichert wird. Ferner erübrigt sich eine regelmäßige Teilerneuerung des Elektrolyten zur Qualitätssicherung.

Außerdem kann als das Prozessbad ein Zn/Ni-Elektrolyt und /oder es können die nach dem Prozessbad anfallenden Spülwässer eingedampft werden, in der unteren Phase können Salze der Anionen des Zn/Ni-Elektrolyten, in der mittleren Phase der gereinigte Zn/Ni-Elektrolyt und in der oberen Phase können organische Verunreinigungen angereichert werden. Infolgedessen können durch Abtrennen der unteren Phase und der oberen Phase ausgefällte Salze und organische Verunreinigungen des Zn/Ni-Elektrolyten eines galvanischen Prozesses aus dem Prozessbad entfernt werden.

Der Dichteunterschied der oberen Phase und der mittleren Phase ermöglicht eine zuverlässige Trennung.

Je nach Art, Alter und Zustand des Bades werden etwa 14 % untere Phase, etwa 80 % mittlere Phase und etwa 6 % obere Phase erhalten. Dies ermöglicht, dass das Volumen des regenerierten Prozessbades beim Abtrennen der unteren und der oberen Phasen nur um einen kleinen Teil verringert wird, so dass nur eine kleine Menge an neuen Bad-Chemikalien zur Ergänzung dem Prozessbad zugesetzt werden muss.

Die untere Phase kann durch Sedimentieren, Abnutschen und/oder Zentrifugieren abgetrennt werden. So kann auf schonende Weise eine der Phasen, die Verunreinigungen enthält, entfernt werden.

Das beim Eindampfen erhaltene Destillat kann als Spülwasser (anstelle von Frischwasser oder vollentsalztem Wasser) verwendet werden. Dadurch wird der Stoff-Kreislauf für den gesamten Prozess geschlossen. Eine Abwasserbehandlung oder externe Entsorgung des Spülwassers ist nicht erforderlich.

Außerdem kann die obere Phase eventuell einer thermischen Verwertung zugeführt werden. Dadurch kann die obere Phase beispielsweise durch Verbrennen auf einfache Weise entsorgt werden.

Nachfolgend wird die Erfindung rein beispielhaft unter Bezugnahme auf die beigefügte Zeichnung beschrieben. Es zeigt:

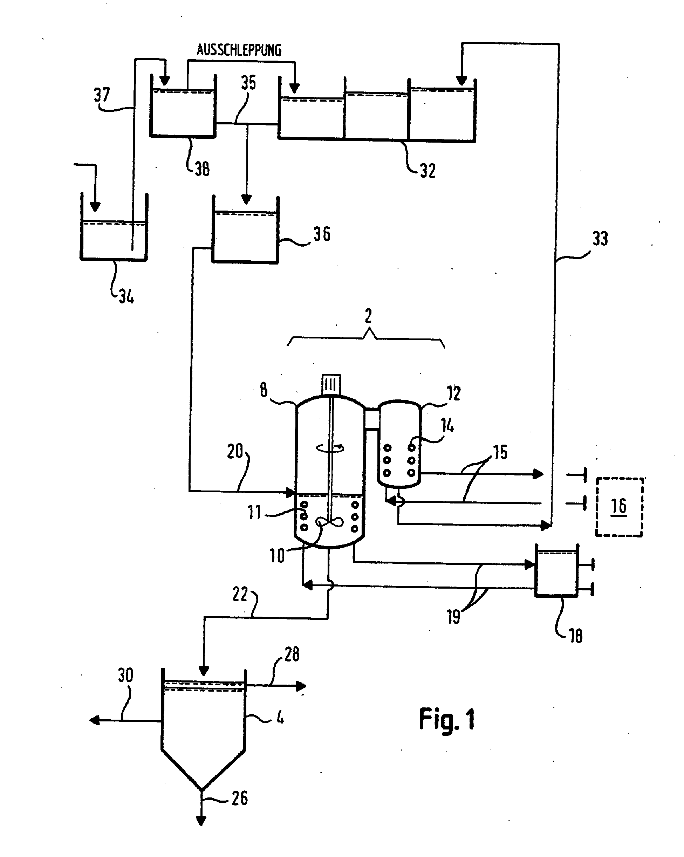

- Fig. 1: eine schematische Darstellung einer Ausführungsform einer erfindungsgemäßen Vorrichtung.

Die in Fig. 1 gezeigte Ausführungsform einer erfindungsgemäßen Vorrichtung zur Rückführung von anfallendem Spülwasser (bei 35) in ein Prozessbad 38 und der gleichzeitigen Reinigung des Prozessbades 38 dient zur Stoffkreislaufschließung (Spülwasserrückführung) und zum gleichzeitigen Reinigen eines Zn/Ni-Elektrolyten eines galvanischen Prozesses. Sie umfasst neben dem Prozessbadbehälter 38 und einem Spülwasserbehälter 32 einen Vakuumeindampfer 2 und einen Behälter 4 zur Phasentrennung.

Der Vakuumeindampfer 2 weist einen Kessel 8 und eine Kondensatkammer 12 auf. Innerhalb des Kessels 8 befindet sich ein Rührer 10 und ein innenliegender Wärmetauscher 11. Mit einer in Fig. 1 nicht gezeigten Vakuumpumpe kann im Kessel 8 ein Unterdruck erzeugt werden. Die Kondensatkammer 12 ist mit innenliegenden Kühlrohren 14 versehen, die an einen Kühlkreislauf 15 angeschlossen sind. Ferner kann eine Wärmepumpe 16 vorgesehen werden, um einerseits den Kühlkreislauf 15 mit Kühlwasser zu versorgen und andererseits die Siedewärmetauscher 11 in dem Kessel 8 mit Warmwasser zu versorgen. Das Bezugszeichen 18 bezeichnet einen Warmwasserbehälter, der über einen Warmwasserkreislauf 19 mit dem Wärmetauscher 11 in dem Behälter 8 verbunden ist. Ebenso kann, der Warmwasserkreislauf 19 statt an die Wärmepumpe 16 an bauseitig vorhandene Energie angeschlossen werden oder es kann ein elektrisch beheizter Warmwasserkreislauf zum Einsatz kommen.

Der Kessel 8 weist ferner eine Zuleitung 20 für einen Zn/Ni-Elektrolyten und eine Ableitung 22 für das beim Eindampfen erhaltene Konzentrat auf, die mit dem Behälter 4 zur Phasentrennung in Verbindung steht. Am unteren Ende des Behälters 4 ist eine Ableitung 26 für Sediment, im oberen Bereich ist eine Ableitung 28 für eine obere Phase und im mittleren Abschnitt des Behälters 4 ist eine Ableitung 30 für eine mittlere Phase vorgesehen.

Die Vorrichtung zur Reinigung eines Prozessbades weist weiterhin den Spülwasserbehälter 32, einen Sammelbehälter 34 für das gereinigte Prozessbad und einen Sammelbehälter 36 für den Elektrolyten und das einzudampfende Spülwasser auf.

Zwischen der Kondensatkammer 12 und dem Spülwasserbehälter 32 ist eine Destillatleitung 33 vorgesehen, durch die das Destillat in den Spülwasserbehälter 32 gegeben wird, der als dreifach Kaskadenspülung ausgebildet ist. Zudem kann aus dem Spülwasserbehälter 32 mittels einer in Fig. 1 nicht gezeigten Leitung Spülwasser in den Sammelbehälter 34 zur Verdünnung des Elektrolyten überführt werden. Eine weitere Leitung 35 verbindet den Spülwasserbehälter 32 mit dem Zn/Ni-Prozessbadbehälter 38, in dem der galvanische Prozess stattfindet, und mit dem Sammelbehälter 36.

Der Sammelbehälter 34 für den gereinigten Elektrolyten besitzt eine Ableitung 37, die in den Prozessbadbehälter 38 führt.

Der Sammelbehälter 36 für den Elektrolyten und die Spülwässer ist an die Zuleitung 20 in dem Kessel 8 angeschlossen.

Somit wird einerseits ein Kreislauf für den Zn/Ni-Elektrolyten geschaffen, in den der Prozessbadbehälter 38, der Sammelbehälter 36 für den Elektrolyten, der Kessel 8 des Vakuumeindampfers 2, der Behälter 4 zur Phasentrennung und der Sammelbehälter 34 integriert sind.

Andererseits existiert ein Spülwasser-Kreislauf zwischen dem Spülwasserbehälter 32, dem Sammelbehälter 36 für den Elektrolyten, dem Kessel 8 des Vakuumeindampfers 2 und der Kondensatkammer 12.

Im Folgenden wird ein Verfahren zur Reinigung des Zn/Ni-Elektrolyten unter Verwendung der in Fig. 1 gezeigten Vorrichtung beschrieben.

Zunächst wird dem Prozessbadbehälter 38 Zn/Ni-Elektrolyt entnommen, mit Spülwasser aus dem Spülwasserbehälter 32 vermischt und in dem Sammelbehälter 36 aufgefangen. Aus dem Sammelbehälter 36 wird das Gemisch Spülwasser und verunreinigter Elektrolyt in den Kessel 8 überführt. Sodann wird im Kessel 8 ein Vakuum erzeugt und das Gemisch Spülwasser und Zn/Ni-Elektrolyt wird unter Rühren erwärmt. Das dabei erzeugte Destillat wird in der Kondensatkammer 12 kondensiert und in den Spülwasserbehälter 32 überführt.

Das Konzentrat im Kessel 8 wird so lange bei einer regulierten Temperatur geheizt und eingedampft, bis der gewünschte Konzentrierungsfaktor erreicht ist. Dann wird der Kreislauf unterbrochen und das Konzentrat wird über die Ableitung 22 in den Behälter 4 zur Phasentrennung überführt.

In dem Behälter 4 zur Phasentrennung wird dem Konzentrat Gelegenheit gegeben, sich durch Sedimentation in eine feste untere Phase, eine wässrige mittlere Phase und in eine obere Phase aufzutrennen. Die feste untere Phase kann je nach Art, Alter und Verunreinigung des Elektrolyten etwa 14 % des Konzentratvolumens aufweisen und enthält Natriumsulfat und Natriumcarbonat. Die wässrige mittlere Phase enthält den gereinigten Zn/Ni-Elektrolyten, also NaOH, Zn und Ni und nimmt etwa 80 % des Konzentratvolumens ein. Die obere Phase ist spezifisch leichter als die wässrige Phase, macht etwa 6 % des Konzentratvolumens aus und umfasst organische Abbauprodukte (CSB), Metallkomplexe, die nicht mehr zur Funktion des Elektrolyten beitragen, N, Zn und Ni.

Nach der Ausbildung der drei Phasen wird die obere Phase durch die Ableitung 28 einer thermischen Verwertung zugeführt. Die mittlere, den gereinigten Elektrolyten enthaltende Phase wird aus der im mittleren Bereich des Behälters angeordneten Ableitung 30 in den Sammelbehälter 34 für den Elektrolyten geleitet, dort mit Spülwasser auf die benötigte Konzentration des Elektrolyten verdünnt und in den Prozessbadbehälter 38 überführt. Die untere, feste Phase wird über die Ableitung 26 aus dem Behälter 4 abgelassen und nach einem eventuell erforderlichen Reinigungsschritt ins Abwasser geleitet.

Auf diese Weise kann der Zn/Ni-Elektrolyt regelmäßig in bestimmten Zeitabständen regeneriert werden. Das erfindungsgemäße Verfahren gewährleistet dabei eine gleich bleibende Elektrolytzusammensetzung und eine konstante Stromausbeute, so dass eine gleich bleibend gute Qualität der galvanischen Schichten gesichert ist. Gleichzeitig ist aufgrund der effektiven Regenerierung des Elektrolyten und aufgrund der Rückführung des Spülwassers ein geringer Chemikalieneinsatz zur Aufrechterhaltung der Qualität des Elektrolyten erforderlich. Zudem ermöglicht die erfindungsgemäße Vorrichtung, dass in einer Anlage gleichzeitig eine Regeneration des Elektrolyten und eine Rückführung des Spülwassers in den Prozess durchgeführt wird. Dadurch werden erhebliche Mengen an Abwasserbehandlungschemikalien und an Badchemikalien eingespart. Zusätzlich wird durch Wiederverwenden des Destillats als Spülwasser die zu zuführende Menge an vollentsalztem Wasser zum Abspülen der Waren gering gehalten.

### Bezugszeichenliste

- 2: Vakuumeindampfer
- 4: Behälter zur Phasentrennung
- 8: Kessel
- 10: Rührer
- 11: Wärmetauscher
- 12: Kondensatkammer
- 14: Kühlrohre
- 15: Kühlkreislauf
- 16: Wärmepumpe
- 18: Warmwasserbehälter
- 19: Warmwasserkreislauf
- 20: Zuleitung
- 22: Ableitung
- 26: Ableitung
- 28: Ableitung
- 30: Ableitung
- 32: Spülwasserbehälter
- 33: Destillatleitung
- 34: Sammelbehälter
- 35: Leitung
- 36: Sammelbehälter
- 37: Ableitung
- 38: Prozessbadbehälter

## Patentansprüche

1. Verfahren zum Reinigen eines in einem Prozess verwendeten Prozessbades, insbesondere zum Reinigen eines Zn/Ni-Elektrolyten eines galvanischen Prozesses,
**dadurch gekennzeichnet, dass**
zumindest ein Teil des in dem Prozess verwendeten Prozessbades eingedampft wird, bis eine Phasentrennung in eine untere Phase, mindestens eine mittlere Phase und eine obere Phase erfolgt, und die untere und die obere Phase abgetrennt werden.

2. Verfahren zur Rückführung von Spülwasser nach einem Prozessbad zurück in das Prozessbad, insbesondere zur Rückführung der Spülwässer eines Zn/Ni-Elektrolyten eines galvanischen Prozesses,
**dadurch gekennzeichnet, dass**
das anfallende Spülwasser eingedampft wird, bis eine Phasentrennung in eine untere Phase, mindestens eine mittlere Phase und eine obere Phase erfolgt, und
die untere und die obere Phase abgetrennt werden.

3. Verfahren nach Anspruch 1 oder 2,
**dadurch gekennzeichnet, dass**
in einer mittleren Phase gereinigtes Prozessbad angereichert wird.

4. Verfahren nach einem der vorstehenden Ansprüche,
**dadurch gekennzeichnet, dass**
die untere Phase als Sedimentations-Phase,
die mittlere Phase als wässrige Phase und die obere Phase mit einem im Vergleich zur wässrigen Phase geringerem spezifischen Gewicht gebildet wird.

5. Verfahren nach einem der vorstehenden Ansprüche,
**dadurch gekennzeichnet, dass**
in der unteren Phase Salze des Prozessbades und
in der oberen Phase organische Verunreinigungen und/oder Metallkomplexe angereichert werden.

6. Verfahren nach einem der vorstehenden Ansprüche,
**dadurch gekennzeichnet, dass**
das verwendete Prozessbad oder der Teil des verwendeten Prozessbades aus dem Prozess entnommen, bis zur Phasentrennung eingedampft und die mittlere Phase als gereinigtes Prozessbad in den Prozess zurückgeführt wird.

7. Verfahren nach einem der vorstehenden Ansprüche 2 bis 6,
**dadurch gekennzeichnet, dass**
erstes Spülwasser nach dem Prozessbad bis zur Phasentrennung eingedampft und die mittlere Phase als gereinigtes Prozessbad in den Prozess zurückgeführt wird.

8. Verfahren nach einem der vorstehenden Ansprüche,
**dadurch gekennzeichnet, dass**
das verwendete Prozessbad oder ein Teil des verwendeten Prozessbades aus dem Prozess entnommen und gemeinsam mit Spülwasser bis zur Phasentrennung eingedampft und die mittlere Phase als gereinigtes Prozessbad in den Prozess zurückgeführt wird.

9. Verfahren nach einem der vorstehenden Ansprüche,
**dadurch gekennzeichnet, dass**
das Eindampfen im Vakuum bei niedrigen Temperaturen durchgeführt wird.

10. Verfahren nach einem der vorstehenden Ansprüche,
**dadurch gekennzeichnet, dass**
das Eindampfen und Abtrennen periodisch wiederholt wird.

11. Verfahren nach einem der vorstehenden Ansprüche,
**dadurch gekennzeichnet, dass**
als das Prozessbad ein Zn/Ni-Elektrolyt und / oder ein erstes Spülwasser nach dem Zn/Ni-Elektrolyt eingedampft wird,
in der unteren Phase Salze der Anionen des Zn/Ni-Elektrolyten, in der mittleren Phase der gereinigte Zn/Ni-Elektrolyt und in der oberen Phase organische Verunreinigungen angereichert werden.

12. Verfahren nach einem der vorstehenden Ansprüche,
**dadurch gekennzeichnet, dass**
die untere Phase durch Sedimentieren, Abnutschen und/oder Zentrifugieren abgetrennt wird.

13. Verfahren nach einem der vorstehenden Ansprüche,
**dadurch gekennzeichnet, dass**
ein beim Eindampfen erhaltenes Destillat als Spülwasser nach dem Prozess und/oder zum Verdünnen des gereinigten Prozessbades bei der Rückführung in den Prozess verwendet wird.

14. Verfahren nach einem der vorstehenden Ansprüche,
**dadurch gekennzeichnet, dass**
die obere Phase einer thermischen Verwertung zugeführt wird.

15. Vorrichtung zur Reinigung eines in einem Prozess verwendeten Prozessbades und/oder von Spülwasser, insbesondere zum Reinigen eines Zn/Ni-Elektrolyten eines galvanischen Prozesses,
**dadurch gekennzeichnet, dass**
eine Vorrichtung (2) zum Eindampfen des Prozessbades und /oder des Spülwassers nach dem Prozessbad, und
Mittel (4) zur Abtrennung von Phasen des Prozessbades und / oder des Spülbades vorgesehen sind.

16. Vorrichtung nach Anspruch 15,
**dadurch gekennzeichnet, dass**
Mittel zur Entnahme des verwendeten Prozessbades aus dem Prozess, und
Mittel (30, 34) zur Rückführung des gereinigten Prozessbades in den Prozess vorgesehen sind.

17. Vorrichtung nach einem der Ansprüche 15 oder 16,
**dadurch gekennzeichnet, dass**
die Vorrichtung (2) zum Eindampfen des Prozessbades und /oder des Spülwassers zum Eindampfen unter Vakuum bei niedrigen Temperaturen von etwa 45 - 55 °C ausgebildet ist.

18. Vorrichtung nach einem der Ansprüche 15 bis 17,
**dadurch gekennzeichnet, dass**
Mittel (28) zum Zuführen der oberen Phase zu einer thermischen Verwertung vorgesehen sind.
